# EUROPEAN PATENT SPECIFICATION

(11) **EP 4 678 567 B1**
(45) Date of publication and mention of the grant of the patent: **26.08.2026**
(21) Application number: 25187167.9
(22) Date of filing: 03.07.2025
(51) Int. Cl.: B65G 25/02, B65G 47/82

(54) **MOVEMENT SYSTEM**
BEWEGUNGSSYSTEM
SYSTÈME DE DÉPLACEMENT

(30) Priority: 10.07.2024 IT 202400015952
(43) Date of publication of application: 14.01.2026
(73) Proprietor: G.D S.p.A., 40133 Bologna (IT)
(72) Inventor: CESARI, Marco, Bologna (IT); DEGLIESPOSTI, Paolo, Bologna (IT)
(74) Representative: Puggioli, Tommaso

(56) References cited:
- CN-A- 114 684 594
- US-A1- 2012 222 941
- US-A1- 2016 280 466
- US-A1- 2017 050 806

## Description

This invention relates to a movement system for industrial applications intended in particular for moving and arranging articles, for example in automatic machines for filling and capping bottles.

Numerous movement systems are known in the sector of automatic machines for moving and arranging products and articles such as, for example, ampoules, containers, caps and the like.

Movements of products in a plane XY may be obtained by means of movement systems which basically comprise at least a motor, a transmission mechanism, and a member for engaging with the articles driven by the motor by means of the transmission mechanism.

There are applications wherein, in order to move and/or arrange, for example, a plurality of products simultaneously, movement systems have been developed which use a single rigid unit, for example a comb unit, for engaging with the articles which may be moved by several transmission mechanisms coupled to each other.

These movement systems comprise, for example, the engagement member, which can be likened to a rod, and a first and a second transmission mechanism both connected to the engagement member.

US 2016/280466 A1 discloses a system for moving articles according to the preamble of independent claim 1.

A drawback of these systems derives from the fact that, since the engagement member is rigid, the transmission mechanisms must guarantee, schematically, that the distance between the respective end followers, directly connected to the engagement member and connected to each other by means of the engagement member, always remains constant during a movement of the engagement member.

Given that even only for the production and/or assembly tolerances it is substantially impossible to obtain the constancy of the above-mentioned distance.

In use, stresses are created in the movement system due to the kinematic chain and the fact that the end followers of the transmission mechanisms are rigidly connected to each other.

These stresses may cause damage to the movement system, reducing the useful life of the system or requiring maintenance operations,

There is therefore need for reliable movement systems which are not influenced at least by the construction and assembly tolerances.

In this context, the intention is to propose a system for moving articles that is capable of overcoming at least some of the above-mentioned drawbacks of the prior art and of meeting the above-mentioned need.

In particular, the aim of this invention is to provide a reliable movement system for a plurality of products.

This aim is achieved by a movement system comprising the technical features described in one or more of the accompanying claims. The dependent claims correspond to possible different embodiments of the invention.

According to an aspect, the invention relates to a system for moving articles intended in particular for moving and arranging articles, for example in automatic machines for filling and capping bottles.

The movement system comprises at least one motor, for example an electric motor, a first and a second transmission mechanism driven by the motor.

The first transmission mechanism comprises a first pin and the second transmission mechanism comprises a second pin.

The movement system comprises a rigid engagement member configured to engage with the articles to be moved.

The engagement member is constrained to the first pin and to the second pin and driven by the motor by means of the first and the second transmission mechanisms.

The motor, the first and the second transmission mechanism impose a law of motion on the engagement member.

Preferably, the movement system is configured in such a way that the engagement member is movable in a plane comprising the engagement member itself.

More specifically, the engagement member is movable along a direction of feeding the products forwards and backwards and along a direction transversal to the direction of feeding the products towards the products and away from the products with a law of motion also known as "to and fro motion".

The engagement member is comb-shaped for transporting the articles engaging them between the prongs.

The first pin is idle and rotatable about a first axis of rotation which is concentric with the first pin.

The second pin is idle and rotatable at least about a second axis of rotation which is eccentric relative to the second pin.

The engagement member is rigidly connected to the first pin and rotatably to the second pin.

The engagement member is rotatable about an axis of rotation coaxial with the second pin.

The first pin is rotatable, relative to an end follower of the first transmission mechanism, about a first axis of rotation concentric with the first pin.

The second pin is idle and rotatable at least about a second axis of rotation which is eccentric relative to the axis of rotation of the engagement member coaxial to the second pin.

Advantageously, the idle eccentric pin acts as a lever. The second idle eccentric pin assists any relative position errors between the first and the second pin allowing the stresses which would be generated to be annulled if the centre-to-centre distance between the first and the second axis of rotation does not correspond to the length of the engagement member.

The length of the engagement member means the distance along the engagement member between the portions of the engagement member intended to be constrained to the first and the second pin.

By rotating eccentrically, the second pin may, in use, move towards or away from the first pin.

The second pin rotatable at least to the second axis of rotation which is eccentric relative to the second pin allows the centre-to-centre distance between the first and the second pin to be kept constant.

Advantageously, the movement system operates regardless of the architecture of the first and the second transmission mechanisms.

Preferably, the first and the second axis of rotation are parallel.

Preferably, the first axis of rotation and the second axis of rotation are at right angles to the engagement member.

Preferably, the movement system comprises a crank driven by the motor and a connecting rod driven by the crank.

The first and the second transmission mechanism are driven by the connecting rod.

Advantageously, the connecting rod and the crank allow the first and the second transmission mechanisms to be driven by a single motor.

The connecting rod, the crank, the first transmission mechanism and the second transmission mechanism define at least partly a kinematic chain of the movement system. The second pin rotatable about the second axis of rotation which is eccentric relative to the second pin allows the centre-to-centre distance between the first and the second pin to be kept constant regardless of the errors introduced in the relative positioning of the first and the second pin due to the kinematic chain.

Preferably, the first pin has two degrees of freedom in the plane comprising the engagement member.

Preferably, the second pin has two degrees of freedom in the plane comprising the engagement member.

Advantageously, the engagement member may be in this way movable with translational motion.

The movement system may be used for moving the articles along processing lines comprising several processing stations positioned in series.

For example, the first and the second transmission mechanisms in particular may be configured in such a way as to transfer the articles by translation.

Further features and advantages of the above-mentioned aspects are more apparent in the non-limiting description which follows of a preferred, non-limiting embodiment of a movement system.

The description is set out below with reference to the accompanying drawings which are provided solely for purposes of illustration without restricting the scope of the invention and in which:
- Figure 1 illustrates a schematic perspective view of the movement system according to the invention;

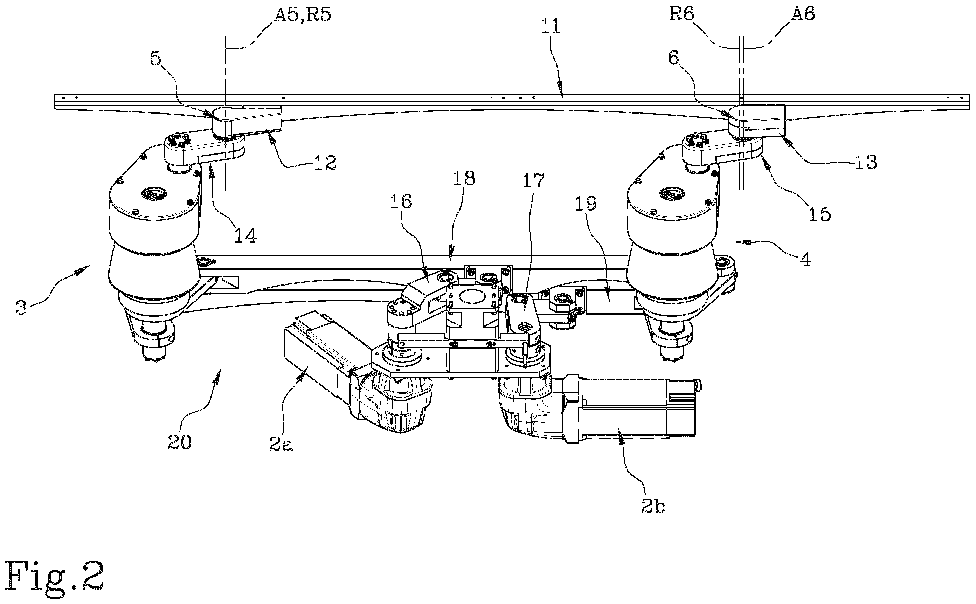

- Figure 2 illustrates a schematic perspective view, with some parts cut away, of the movement system of Figure 1;

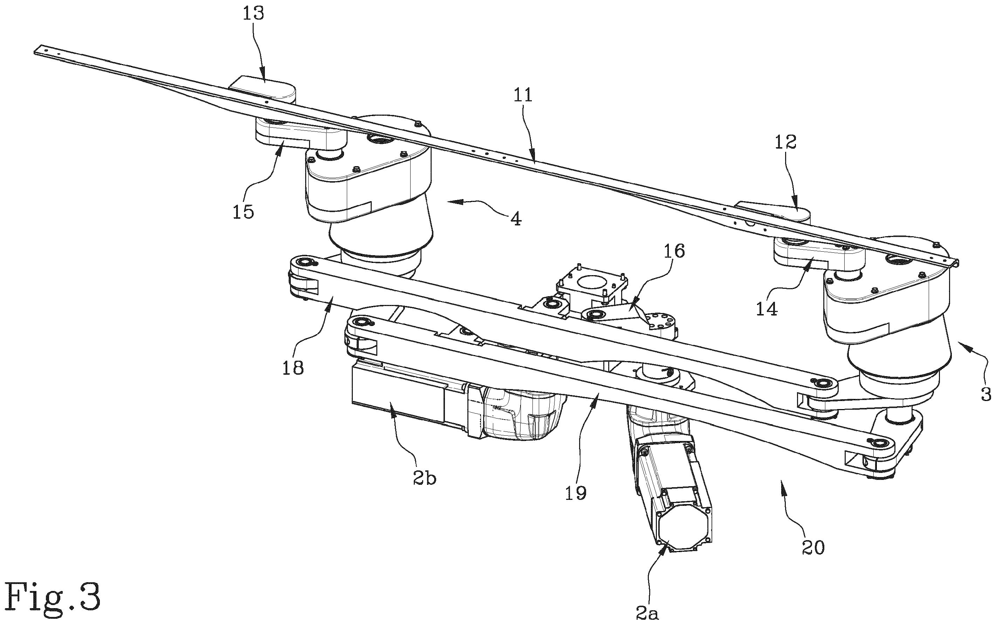

- Figure 3 illustrates a schematic perspective view, with some parts cut away, of the movement system of Figure 1;

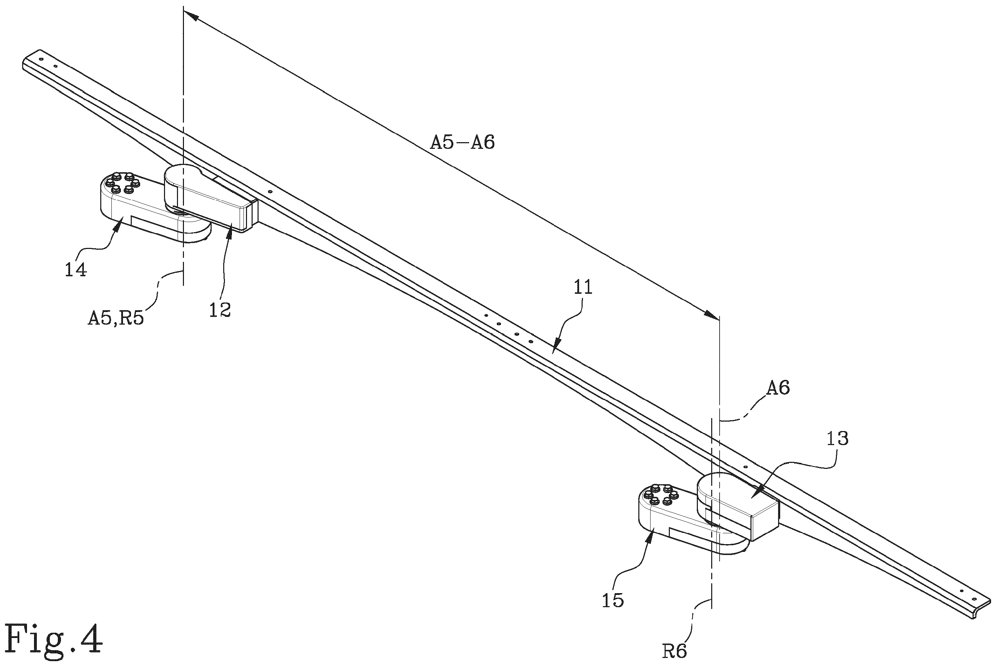

- Figure 4 illustrates a schematic perspective view of a detail of the movement system of the preceding drawings;
- Figure 5 illustrates a schematic cross section of a detail of the movement system of the preceding drawings;
- Figure 6 illustrates a schematic cross section of a detail of the movement system of the preceding drawings.

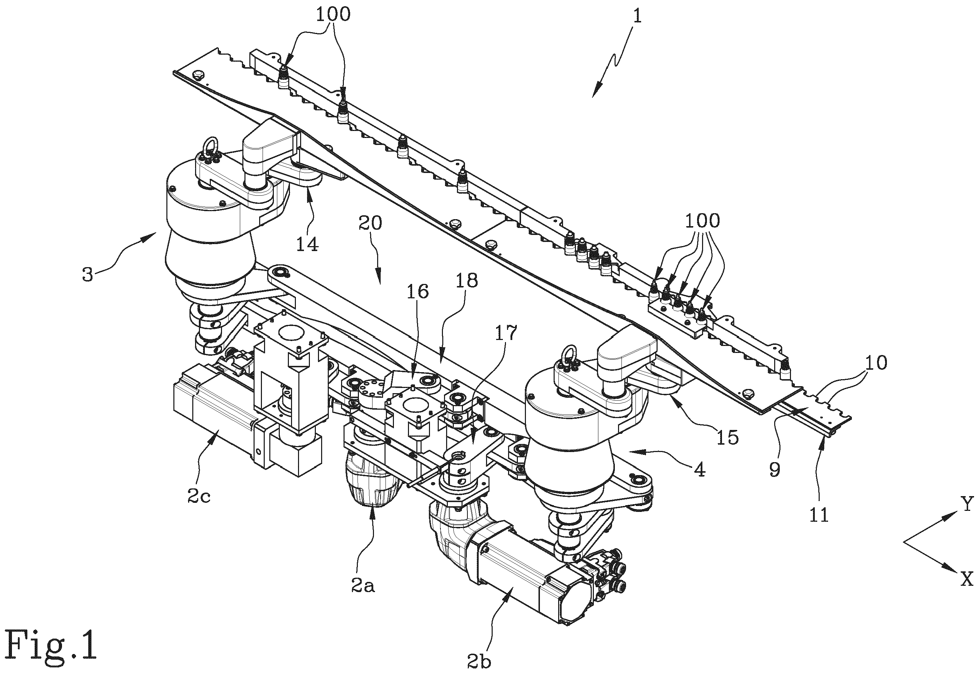

With particular reference to Figure 1, the numeral 1 denotes a movement system according to this invention.

The movement system 1 is described in detail below, limited to the parts necessary for understanding this invention.

The movement system 1 is, according to the example illustrated, intended for moving articles 100.

The movement system 1 may be intended for automatic machines for filling and capping bottles and the articles 100 shown are, for example, vials.

The movement system 1 is configured to move all the articles 100 simultaneously.

Preferably, the movement system 1 is configured to provide a movement, preferably performing a translation of a fixed spacing of the articles 100 along a feed direction X.

Preferably, the movement system 1 is configured to provide the translation of a fixed spacing of the articles 100 at constant time intervals.

The movement system 1 comprises a plurality of motors 2a, 2b, 2c, for example electric motors.

The movement system 1 comprises a first and a second transmission mechanism 3, 4 driven by the motors 2a, 2b, 2c.

The first and the second transmission mechanisms 3, 4 are not described in detail but limited to an understanding of this invention, regardless of the architecture of the first and the second transmission mechanisms 3, 4.

The first transmission mechanism comprises a first pin 5 having a main axis A5 and the second transmission mechanism comprises a second pin 6 having a main axis A6.

The first pin 5 is idle and rotatable about an axis of rotation R5 which is concentric with the first pin 5.

In practice, the main axis A5 coincides with the axis of rotation R5.

The second pin 6 is idle and rotatable at least about an axis of rotation R6 which is eccentric relative to the second pin 6.

The centre-to-centre distance A5-A6 between the main axis A5 and the main axis A6 depends on the position of the second pin 6 and of the main axis A6 relative to the axis of rotation R6.

The main axis A6 is parallel to the axis of rotation R6.

The axis of rotation R5 is parallel to the axis of rotation R6.

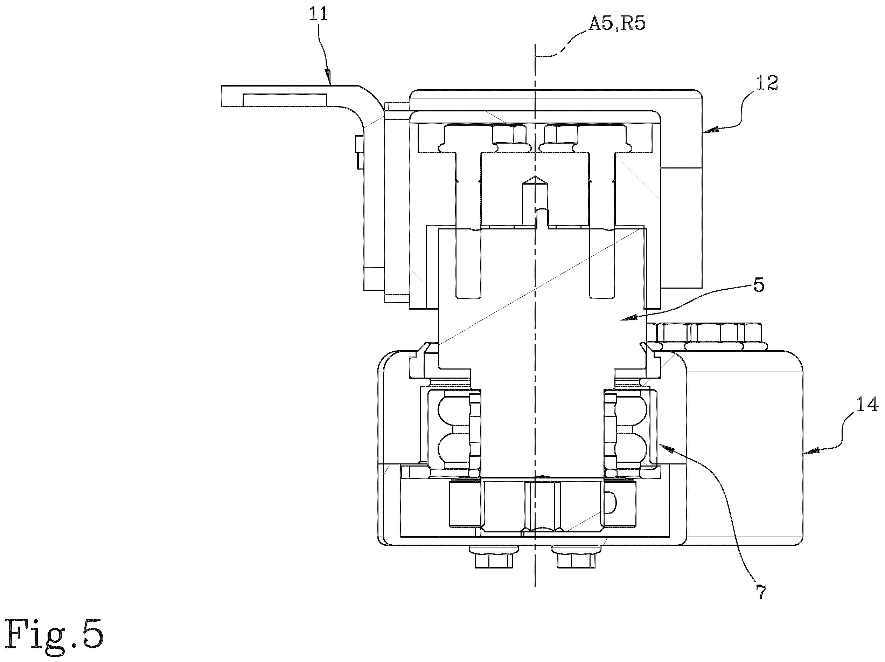

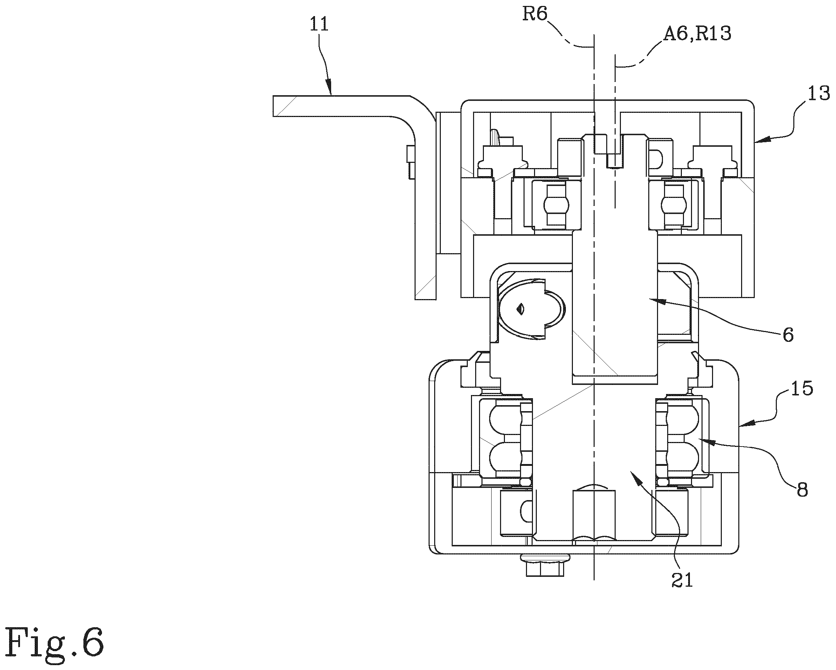

With reference to Figures 5 and 6, it should be noted that the first pin 5 and the second pin 6 are mounted, for example, on a respective bearing 7, 8.

The movement system 1 comprises a rigid engagement member 9, configured to engage with the articles 100 to be moved.

The engagement member 9 is constrained to the first pin and to the second pin 5, 6 and driven by at least one motor 2a, 2b by means of the first and the second transmission mechanisms 3, 4.

The engagement member 9 is rigidly connected to the first pin 5 and rotatably to the second pin 6.

The axis of rotation R5 and the axis of rotation R6 are at right angles to the engagement member 9.

The engagement member 9 is a comb-like unit and comprises a plurality of prongs 10 in such a way as to engage the articles 100 between consecutive prongs 10.

The movement system 1, in particular the first and the second transmission mechanisms 3, 4, is configured in such a way that the engagement member 9 is movable in a plane XY comprising the engagement member 9.

The first and second transmission mechanisms 3, 4 and one or more motors 2a, 2b, 2c are configured to impart predetermined trajectories to the first and second pins 5, 6 in the plane XY and, therefore, to the engagement member 9.

The main axes A5, A6 and the axes of rotation R5, R6 are at right angles to the plane XY.

The first pin 5 has two degrees of freedom in the plane XY comprising the engagement member 9.

The second pin 6 has two degrees of freedom in the plane XY comprising the engagement member 9.

According to the example illustrated, the movement system 1 comprises a bracket 11 for supporting the engagement member 9.

The engagement member 9 is constrained to the first and to the second pins 5, 6 by the bracket 11.

The engagement member 9 is, for example, bolted to the bracket 11 which is in turn connected to the first and second pins 5, 6.

The movement system 1 comprises a first coupling unit 12 for constraining the bracket 11 to the first pin 5 and a second coupling unit 13 for constraining the bracket 11 to the second pin 6.

The second coupling unit 13 is rotatably connected to the second pin 6 about an axis of rotation R13 coaxial with the main axis A6.

The engagement unit 9 is rigidly connected to the first pin 5 by means of the bracket 11 and the first coupling unit 12.

The engagement member 9 is constrained in a rotatable fashion about the axis of rotation R13 by the bracket 11 and the second coupling unit 13.

According to the example illustrated, the first pin 5 and the second pin 6 extend from a first lever 14 and from a second lever 15 of the first transmission mechanism 3 and of the second transmission mechanism 4, respectively.

The first lever 14 and the second lever 15 constitute, respectively, the end follower of the first transmission mechanism 3 and the end follower of the second transmission mechanism 4.

The above-mentioned bearing 7 is integrated in the lever 14 and the first pin 5 is constrained to the first lever 14 by the bearing 7 in such a way as to be rotatable about the first axis of rotation R5.

The above-mentioned bearing 8 is integrated in the lever 15 and the second pin 6 is constrained to the second lever 15 by the bearing 8 so as to be rotatable about the second axis of rotation R6 which is eccentric relative to the axis A6 of the second pin 6.

For example, the second transmission mechanism 4 comprises a pin 21, coaxial with the axis of rotation R6 and rotatable about it.

The second pin 6 is rigidly connected to the pin 21 with its axis A6 eccentric relative to the axis of rotation R6.

The first lever 14 and the second lever 15 are connected to each other by the engagement member 9 by means of the bracket 11.

According to the embodiment illustrated, for example, the movement system 1 comprises a first and a second crank 16, 17 driven respectively by a first motor 2a and by a second motor 2b.

According to the embodiment illustrated, for example, the movement system 1 comprises a first and a second link rod 18, 19 driven, respectively, by the first crank 16 and by the second crank 17.

The first crank 16 and the first link rod 18 drive the first transmission mechanism 3 and the first lever 14.

The second crank 17 and the second link rod 19 drive the second transmission mechanism 4 and the second lever 15.

The first and second crank 16, 17, the first and second link rods 18, 19, the first transmission mechanism 3 and the second transmission mechanism 4 define, at least partly, a kinematic chain 20 of the movement system 1.

In use, the second pin 6 rotatable about the axis of rotation R6 eccentric relative to the main axis A6 of the second pin 6 makes it possible to keep constant the centre-to-centre distance A5-A6 between the first and the second pin 5, 6 regardless of the errors introduced in the relative positioning of the first and the second pin 5, 6 due to the kinematic chain 20.

The second pin 6 rotatable about the axis of rotation R6 eccentric relative to its main axis A6 forms a lever which introduces a degree of freedom in the kinematic chain 20.

## Claims

1. A system for moving articles (100) for moving and arranging bottles and the like in automatic machines for filling said bottles, the movement system comprising
an engagement member (9) configured in the form of a comb unit for engaging with said articles (100),
at least one motor (2a, 2b, 2c) for driving the engagement member (9);
a first transmission mechanism (3) driven by said motor (2a, 2b, 2c) operating between said motor (2a, 2b, 2c) and said engagement member (9) to impart to the engagement member (9) a law of motion, said first transmission mechanism comprising a first pin (5) at right angles to the engagement member (9), said movement system comprising
a second transmission mechanism (4) driven by said motor (2a, 2b, 2c) operating between said motor and said engagement member (9) to impart to the engagement member (9) said law of motion, said second transmission mechanism (4) comprising a second pin (6) at right angles to the engagement member (9), said movement system being **characterized in that** said engagement member (9) is rigidly constrained to the first pin (5) and rotatably to the second pin (6) according to an axis of rotation (R13) coaxial with the second pin (6), said engagement member (9) being driven by said motor (2a, 2b, 2c) by means of said first and the second transmission mechanisms (3, 4),
said first pin (5) being idle and rotatable, relative to a last follower of the first transmission mechanism, about a first axis of rotation (R5) concentric with said first pin (5) and said second pin (6) being idle and rotatable at least about a second axis of rotation (R6) eccentric relative to the axis of rotation (R13) of the engagement member (9) coaxial to the second pin (6).

2. The movement system according to claim 1, comprising at least one crank lever (16, 17), driven directly by said motor (2a, 2b, 2c), and at least one link rod (18, 19), driven by said crank lever (16, 17), said first and second transmission mechanisms (3, 4) being connected to said link rod and driven by said link rod (18, 19).

3. The movement system according to claim 1 or 2, configured so that said engagement member (9) is movable in a plane (XY) comprising said engagement member (9).

4. The movement system according to claim 3, wherein said first pin (5) has two degrees of freedom in said plane (XY).

5. The movement system according to claim 3 or 4, wherein said second pin (6) has two degrees of freedom in said plane (XY).

6. The movement system according to any one of the preceding claims, comprising a bracket (11) for supporting the engagement member (9), said engagement member (9) being constrained to the first and second pins (5, 6) via said bracket (11).

7. The movement system according to claim 6, comprising a first fastening assembly (12) to constrain said bracket (11) to said first pin (5), and a second fastening assembly (13) to constrain said bracket (11) to said second pin (6), the second fastening assembly (13) being constrained to the second pin (6) rotatably about the axis of rotation (R13) which is coaxial with said second pin (6).

8. The movement system according to any one of the preceding claims, wherein said first transmission mechanism (3) comprises a first lever (14) and said second transmission mechanism comprises a second lever (15), said first pin (5) jutting from said first lever (14) and said second pin (6) jutting from said second lever (15).

9. The movement system according to claim 8, wherein said first lever (14) and said second lever (15) constitute said end follower of the first transmission mechanism (3) and of the second transmission mechanism (4), respectively.

## Patentansprüche

1. System zum Bewegen von Artikeln (100) zum Bewegen und Anordnen von Flaschen und dergleichen in automatischen Maschinen zum Befüllen dieser Flaschen, wobei das Bewegungssystem Folgendes umfasst
ein Eingriffselement (9), das in Form einer Kammeinheit zum Eingriff mit den Artikeln (100) ausgelegt ist, mindestens einen Motor (2a, 2b, 2c) zum Antrieb des Eingriffselements (9);
einen ersten Getriebemechanismus (3), der von dem Motor (2a, 2b, 2c) angetrieben wird und zwischen dem Motor (2a, 2b, 2c) und dem Eingriffselement (9) wirkt, um dem Eingriffselement (9) ein Bewegungsprinzip zu verleihen, wobei der erste Getriebemechanismus einen ersten Zapfen (5) im rechten Winkel zum Eingriffselement (9) umfasst, wobei das Bewegungssystem
einen zweiten Getriebemechanismus (4) umfasst, der von dem Motor (2a, 2b, 2c) angetrieben wird und zwischen dem Motor und dem Eingriffselement (9) wirkt, um dem Eingriffselement (9) das Bewegungsprinzip zu verleihen, wobei der zweite Getriebemechanismus (4) einen zweiten Zapfen (6) im rechten Winkel zum Eingriffselement (9) umfasst, wobei das Bewegungssystem **dadurch gekennzeichnet ist, dass** das Eingriffselement (9) starr am ersten Zapfen (5) und drehbar am zweiten Zapfen (6) gemäß einer Rotationsachse (R13) befestigt ist, die koaxial zum zweiten Zapfen (6) ist, wobei das Eingriffselement (9) vom Motor (2a, 2b, 2c) mittels des ersten und des zweiten Getriebemechanismus (3, 4) angetrieben wird,
wobei der erste Zapfen (5), relativ zu einem letzten Folgeteil des ersten Getriebemechanismus um eine erste Rotationsachse (R5) frei und drehbar ist, die konzentrisch zum Zapfen (5) ist, und wobei der zweite Zapfen (6) mindestens um eine zweite Rotationsachse (R6) frei und drehbar ist, die relativ zur Rotationsachse (R13) des Eingriffselements (9) exzentrisch ist, das koaxial zum zweiten Zapfen (6) ist.

2. Bewegungssystem nach Anspruch 1, umfassend mindestens einen Kurbelhebel (16, 17), der direkt von dem Motor (2a, 2b, 2c) angetrieben wird, und mindestens eine Verbindungsstange (18, 19), die von dem Kurbelhebel (16, 17) angetrieben wird, wobei der erste und der zweite Getriebemechanismus (3, 4) mit der Verbindungsstange verbunden sind und von der Verbindungsstange (18, 19) angetrieben werden.

3. Bewegungssystem nach Anspruch 1 oder 2, das so ausgelegt ist, dass das Eingriffselement (9) in einer Ebene (XY) bewegbar ist, die das Eingriffselement (9) umfasst.

4. Bewegungssystem nach Anspruch 3, wobei der erste Zapfen (5) zwei Freiheitsgrade in der genannten Ebene (XY) aufweist.

5. Bewegungssystem nach Anspruch 3 oder 4, wobei der zweite Zapfen (6) zwei Freiheitsgrade in der genannten Ebene (XY) aufweist.

6. Bewegungssystem nach einem der vorhergehenden Ansprüche, umfassend eine Halterung (11) zum Stützen des Eingriffselements (9), wobei das Eingriffselement (9) über die Halterung (11) am ersten und zweiten Zapfen (5, 6) befestigt ist.

7. Bewegungssystem nach Anspruch 6, umfassend eine erste Befestigungsanordnung (12), zum Befestigen der Halterung (11) am ersten Zapfen (5), sowie eine zweite Befestigungsanordnung (13), zum Befestigen der Halterung (11) am zweiten Zapfen (6), wobei die zweite Befestigungsanordnung (13) am zweiten Zapfen (6) drehbar um die Rotationsachse (R13) befestigt ist, die koaxial zum zweiten Zapfen (6) ist.

8. Bewegungssystem nach einem der vorhergehenden Ansprüche, wobei der erste Getriebemechanismus (3) einen ersten Hebel (14) umfasst und der zweite Getriebemechanismus einen zweiten Hebel (15) umfasst, wobei der erste Zapfen (5) aus dem ersten Hebel (14) vorspringt und der zweite Zapfen (6) aus dem zweiten Hebel (15) vorspringt.

9. Bewegungssystem nach Anspruch 8, wobei der erste Hebel (14) und der zweite Hebel (15) jeweils das Endfolgeteil des ersten Getriebemechanismus (3) bzw. des zweiten Getriebemechanismus (4) bilden.

## Revendications

1. Système de déplacement d'articles (100) pour déplacer et agencer des bouteilles et similaires dans des machines automatiques pour remplir lesdites bouteilles, le système de déplacement comprenant
un élément d'engagement (9) configuré sous la forme d'un peigne pour s'engager avec lesdits articles (100),
au moins un moteur (2a, 2b, 2c) pour entraîner l'élément d'engagement (9) ;
un premier mécanisme de transmission (3) entraîné par ledit moteur (2a, 2b, 2c) fonctionnant entre ledit moteur (2a, 2b, 2c) et ledit élément d'engagement (9) pour conférer à l'élément d'engagement (9) une loi de déplacement, ledit premier mécanisme de transmission comprenant une première goupille (5) perpendiculaire à l'élément d'engagement (9), ledit système de déplacement comprenant
un second mécanisme de transmission (4) entraîné par ledit moteur (2a, 2b, 2c) fonctionnant entre ledit moteur et ledit élément d'engagement (9) pour conférer à l'élément d'engagement (9) ladite loi de déplacement, ledit second mécanisme de transmission (4) comprenant une seconde goupille (6) perpendiculaire à l'élément d'engagement (9), ledit système de déplacement étant **caractérisé en ce que** ledit élément d'engagement (9) est contraint de manière rigide à la première goupille (5) et de manière rotative à la seconde goupille (6) selon un axe de rotation (R13) coaxial à la seconde goupille (6), ledit élément d'engagement (9) étant entraîné par ledit moteur (2a, 2b, 2c) au moyen desdits premier et second mécanismes de transmission (3, 4),
ladite première goupille (5) étant libre et rotative, par rapport à un dernier suiveur du premier mécanisme de transmission, autour d'un premier axe de rotation (R5) concentrique à ladite première goupille (5) et ladite seconde goupille (6) étant libre et rotative au moins autour d'un second axe de rotation (R6) excentrique par rapport à l'axe de rotation (R13) de l'élément d'engagement (9) coaxial à la seconde goupille (6).

2. Système de déplacement selon la revendication 1, comprenant au moins un levier à manivelle (16, 17), entraîné directement par ledit moteur (2a, 2b, 2c), et au moins une bielle (18, 19), entraînée par ledit levier à manivelle (16, 17), lesdits premier et second mécanismes de transmission (3, 4) étant reliés à ladite bielle et entraînés par ladite bielle (18, 19).

3. Système de déplacement selon la revendication 1 ou 2, configuré de sorte que ledit élément d'engagement (9) est mobile dans un plan (XY) comprenant ledit élément d'engagement (9).

4. Système de déplacement selon la revendication 3, dans lequel ladite première goupille (5) a deux degrés de liberté dans ledit plan (XY).

5. Système de déplacement selon la revendication 3 ou 4, dans lequel ladite seconde goupille (6) a deux degrés de liberté dans ledit plan (XY).

6. Système de déplacement selon l'une quelconque des revendications précédentes, comprenant un support (11) pour supporter l'élément d'engagement (9), ledit élément d'engagement (9) étant contraint aux première et seconde goupilles (5, 6) via ledit support (11).

7. Système de déplacement selon la revendication 6, comprenant un premier ensemble de fixation (12) pour contraindre ledit support (11) à ladite première goupille (5), et un second ensemble de fixation (13) pour contraindre ledit support (11) à ladite seconde goupille (6), le second ensemble de fixation (13) étant contraint à la seconde goupille (6) de manière rotative autour de l'axe de rotation (R13) qui est coaxial avec ladite seconde goupille (6).

8. Système de déplacement selon l'une quelconque des revendications précédentes, dans lequel ledit premier mécanisme de transmission (3) comprend un premier levier (14) et ledit second mécanisme de transmission comprend un second levier (15), ladite première goupille (5) faisant saillie dudit premier levier (14) et ladite seconde goupille (6) faisant saillie dudit second levier (15).

9. Système de déplacement selon la revendication 8, dans lequel ledit premier levier (14) et ledit second levier (15) constituent ledit suiveur d'extrémité du premier mécanisme de transmission (3) et du second mécanisme de transmission (4), respectivement.
